(19) Europäisches Patentamt / European Patent Office / Office européen des brevets

(11) **EP 2 878 108 B1**

(12) **EUROPEAN PATENT SPECIFICATION**

(45) Date of publication and mention of the grant of the patent:
**26.04.2023  Bulletin 2023/17**

(21) Application number: **13822741.8**

(22) Date of filing: **18.03.2013**

(51) International Patent Classification (IPC):
**H04L 25/08** $^{(2006.01)}$       **H04L 1/00** $^{(2006.01)}$

(52) Cooperative Patent Classification (CPC):
**H04W 28/18; H04L 1/0048; H04L 1/005;**
**H04L 1/0054**

(86) International application number:
**PCT/KR2013/002195**

(87) International publication number:
**WO 2014/017723 (30.01.2014 Gazette 2014/05)**

(54) **WIRELESS COMMUNICATION SYSTEM WITH INTERFERENCE FILTERING AND METHOD OF OPERATION THEREOF**

DRAHTLOSES KOMMUNIKATIONSSYSTEM MIT INTERFERENZFILTERUNG UND BETRIEBSVERFAHREN DAFÜR

SYSTÈME DE COMMUNICATION SANS FIL AVEC FILTRAGE D'INTERFÉRENCE ET SON PROCÉDÉ D'EXPLOITATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **27.07.2012  US 201213560330**

(43) Date of publication of application:
**03.06.2015  Bulletin 2015/23**

(73) Proprietor: **Samsung Electronics Co., Ltd.**
**Suwon-si, Gyeonggi-do 443-742 (KR)**

(72) Inventors:
• **LEE, Jung-Won**
  **Gyeonggi-do, 443-742 (KR)**
• **KWON, Hyuk-Joon**
  **Gyeonggi-do, 443-742 (KR)**
• **KANG, In-Yup**
  **Gyeonggi-do, 443-742 (KR)**

(74) Representative: **Nederlandsch Octrooibureau**
**P.O. Box 29720**
**2502 LS The Hague (NL)**

(56) References cited:
**EP-A2- 1 233 565      US-A1- 2008 168 326**
**US-A1- 2008 168 326      US-A1- 2008 240 304**
**US-A1- 2009 304 125      US-A1- 2011 051 859**
**US-B1- 7 106 813**

• **KAFLE P L ET AL: "ITERATIVE MULTIUSER RECEIVERS WITH COMBINED GROUP MULTIUSER DETECTION AND INTERFERENCE CANCELLATION FOR SPACE-TIME CODED MC-CDMA SYSTEM", IEICE TRANSACTIONS ON COMMUNICATIONS, COMMUNICATIONS SOCIETY, TOKYO, JP, vol. E87-B, no. 12, 1 December 2004 (2004-12-01), pages 3702-3709, XP001227493, ISSN: 0916-8516**

## Description

### Technical Field

The present invention relates generally to a wireless communication system, and more particularly to a system for managing interference in a wireless communication system.

### Background Art

The next generation cellular system, where the cell size is getting smaller so that inter-cell interference becomes a critical issue in terms of packet error performance, is in the process of deployment. In addition, since both pico-cell and femto-cell services were recently launched, the interference signal from these local cells has also become a major source to degrade the performance for the desired signal. In case of a point-to-point communication where a single transmitter sends a signal to the designated receiver, there is a protocol between the serving node (eNodeB) and the user equipment (UE) so that they can share systematic parameters, such as modulation- and-coding scheme (MCS), handshake signals (ACK/NACK), and control information, that is needed for decoding the desired signal.

In order to address the growing number of interference sources, the interference-aware receiver using iterative detection and decoding (IDD) techniques has been created. The performance of interference-aware receivers can be improved with intelligent interference-aware detection strategy, for the multi-user interference case of asymmetric channel information. Another approach to improving the performance of the interference-aware receiver demonstrates the effectiveness of detection by analyzing the performance of minimum-distance (MD) detectors. None of these approaches has achieved the balance of reliable performance, speed, and implementation cost required for commercial viability.

US 2008/168326 A1 discloses a method receiving apparatus includes a detector for estimating a desired signal and an interference signal; a first decoder for iteratively decoding the interference signal output from the detector; a second decoder for iteratively decoding the desired signal output from the decoder; and an LLR updater for updating an LLR value of the desired signal using an LLR value of the interference signal.

### Disclosure of Invention

### Technical Problem

Thus, a need still remains for the wireless communication system that can reliably receive and decode messages in a region with interference sources. In view of the growing demand for personal communication devices and the exponential increase in interference sources, it is increasingly critical that answers be found to these problems. In view of the ever-increasing commercial competitive pressures, along with growing consumer expectations and the diminishing opportunities for meaningful product differentiation in the marketplace, it is critical that answers be found for these problems. Additionally, the need to reduce costs, improve efficiencies and performance, and meet competitive pressures adds an even greater urgency to the critical necessity for finding answers to these problems.

Solutions to these problems have been long sought but prior developments have not taught or suggested any solutions and, thus, solutions to these problems have long eluded those skilled in the art.

### Solution to Problem

The invention is carried out in accordance with the appended claims.

### Advantageous Effects of Invention

It has been discovered that the wireless communication system and device of the present invention furnishes important and heretofore unknown and unavailable solutions, capabilities, and functional aspects for wireless communication in a region with interference sources. It is understood that while a single channel decode has been discussed, more than one channel can be concurrently supported by the wireless communication system.

The resulting method, process, apparatus, device, product, and/or system is straightforward, cost-effective, uncomplicated, highly versatile and effective, can be surprisingly and unobviously implemented by adapting known technologies, and are thus readily suited for efficiently and economically manufacturing and operating wireless communication systems fully compatible with conventional manufacturing methods or processes and technologies. The resulting method, process, apparatus, device, product, and/or system is straightforward, cost-effective, uncomplicated, highly versatile, accurate, sensitive, and effective, and can be implemented by adapting known components for ready, efficient, and economical manufacturing, application, and utilization.

Another important aspect of the present invention is that it valuably supports and services the historical trend of reducing costs, simplifying systems, and increasing performance.

**Brief Description of Drawings**

FIG. 1 is a hardware block diagram of a wireless communication system in a first embodiment of the present invention.
FIG. 2 is a functional block diagram of the first symbol detector of FIG. 1.
FIG. 3 is a hardware block diagram of a wireless communication system in a second embodiment of the present invention.
FIG. 4 is a flow chart of a joint iterative detection and decode process.
FIG. 5 is a functional block diagram of an application of the wireless communication system of FIG. 1.
FIG. 6 is a flow chart of a method of operation of a wireless communication system in a further embodiment of the present invention.

**Mode for the Invention**

Certain embodiments of the invention have other steps or elements in addition to or in place of those mentioned above. The steps or element will become apparent to those skilled in the art from a reading of the following detailed description when taken with reference to the accompanying drawings.

The following embodiments are described in sufficient detail to enable those skilled in the art to make and use the invention. It is to be understood that other embodiments would be evident based on the present disclosure, and that system, process, or mechanical changes may be made without departing from the scope of the present invention.

In the following description, numerous specific details are given to provide a thorough understanding of the invention. However, it will be apparent that the invention may be practiced without these specific details. In order to avoid obscuring the present invention, some well-known circuits, system configurations, and process steps are not disclosed in detail.

The drawings showing embodiments of the system are semi-diagrammatic and not to scale and, particularly, some of the dimensions are for the clarity of presentation and are shown exaggerated in the drawing FIGs. Similarly, although the views in the drawings for ease of description generally show similar orientations, this depiction in the FIGs. is arbitrary for the most part. Generally, the invention can be operated in any orientation.

Where multiple embodiments are disclosed and described having some features in common, for clarity and ease of illustration, description, and comprehension thereof, similar and like features one to another will ordinarily be described with similar reference numerals. The same numbers are used in all the drawing FIGs. to relate to the same elements. The embodiments have been numbered first embodiment, second embodiment, etc. as a matter of descriptive convenience and are not intended to have any other significance or provide limitations for the present invention.

The term "module" referred to herein can include software, hardware, or a combination thereof. For example, the software can be machine code, firmware, embedded code, and application software. Also for example, the hardware can be circuitry, processor, computer, integrated circuit, integrated circuit cores, a pressure sensor, an inertial sensor, a micro-electromechanical system (MEMS), passive devices, or a combination thereof.

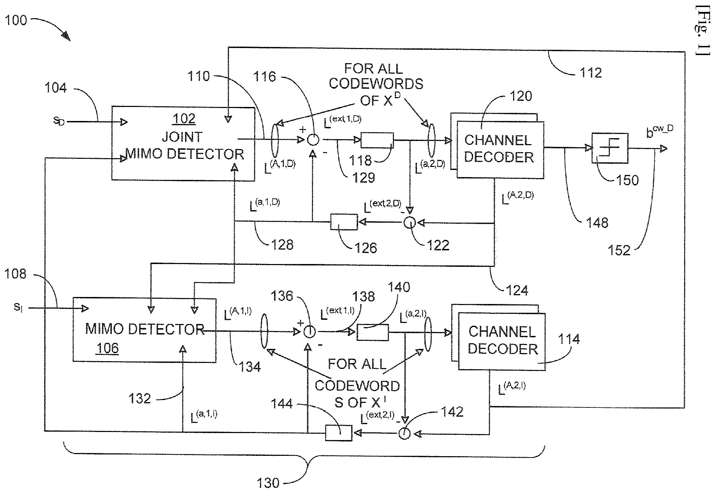

Referring now to FIG. 1, therein is shown a hardware block diagram of a wireless communication system 100 in a first embodiment of the present invention. The hardware block diagram of the wireless communication system 100 depicts a first symbol detector 102, such as a joint multiple input multiple output (J-MIMO) detector, maximum likelihood (ML) detector with interference whitening, or a minimum mean square error (MMSE) detector with interference whitening followed by single-in-single-out (SISO) LLR block, for receiving a desired input signal 104. A second symbol detector 106, such as a multiple input multiple output (MIMO) detector, for receiving an interference input signal 108 that corresponds to the desired input signal 104.

The desired input signal 104 is defined as the selected input frequency and signal amplitude from a communication source, such as an eNodeB, a wireless base station, a communication transceiver, or a wireless hot spot. The desired input signal 104 can be degraded by the presence of the interference input signal 108. The interference input signal 108 is defined as the frequency and the signal amplitude, from any electrical source, that enters the wireless communication system 100 at the same time as the desired input signal 104. The interference input signal 108 can be generated by any transmission source including a second eNodeB, others of the wireless base station, a second communication transceiver, or others of the wireless hot spot.

In order to properly decode the desired input signal 104, the effects of the interference input signal 108 must be negated or reduced. The first symbol detector 102 outputs a desired log-likelihood ratio (LLR) 110, such as *a posteriori* LLR of the desired signal. The desired log-likelihood ratio (LLR) 110 can be calculated by:

MathFigure 1

[Math.1]

$$L_{n,m}^{(A,1,D)} = \log \frac{P\left(b_{n,m}^D = +1 \middle| y\right)}{P\left(b_{n,m}^D = -1 \middle| y\right)}$$

$$= \log \frac{\sum_{b^D \in \{b_{n,j}^D = +1\}, b^I} P(y|b^D b^I) P\left(\frac{1}{2} b^D L_n^{(a,1,D)} + \frac{1}{2} b^I L_n^{(a,1,I)}\right)}{\sum_{b^D \in \{b_{n,j}^D = -1\}, b^I} P(y|b^D b^I) P\left(\frac{1}{2} b^D L_n^{(a,1,D)} + \frac{1}{2} b^I L_n^{(a,1,I)}\right)}$$

$$\approx \max_{\bar\theta \in \{b_{n,j}^D = +1\}, b^I} \left( -\frac{1}{\sigma_n^2} \left\| y - \sqrt{P_D} H^D \bar\theta^D + \sqrt{P_I} H^I x^I \right\| + \frac{1}{2} b^D L_n^{(a,1,D)} + \frac{1}{2} b^I L_n^{(a,1,I)} \right)$$

$$- \max_{\bar\theta \in \{b_{n,j}^D = -1\}, b^I} \left( -\frac{1}{\sigma_n^2} \left\| y - \sqrt{P_D} H^D \bar\theta^D + \sqrt{P_I} H^I x^I \right\| + \frac{1}{2} b^D L_n^{(a,1,D)} \right.$$

$$\left. + \frac{1}{2} b^I L_n^{(a,1,I)} \right)$$

Where:

The term "P(*)" is defined as the transmit power of the incoming signal.
The term "H*" is defined as the channel matrix of the incoming signal, where "D" indicates the incoming desired signal and "I" indicates the incoming interference signal.
The term "$b_{n,m}$" is defined as the bipolar bits representing the $n^{th}$ bit of the $m^{th}$ symbol.
The term "y" represents the incoming base band signal at a sample time.

The interference terms are not treated as broad spectrum noise, but instead are decoded in a similar the desired input signal 104. By alternating the processing and decoding of the desired input signal 104 and the interference input signal 108 the possibility of a dropped call is significantly reduced. A transition point between a first eNodeB and a second eNodeB will require a mode change in order to acquire the signal from a new source of the desired input signal 104. It has been discovered that the new source of the desired input signal 104 is the strongest source of the interference input signal 108 prior to the transition point. By processing and decoding both the desired input signal 104 and the interference input signal 108 a reliable mode change is assured because the desired input signal 104 and the interference input signal 108 just switch and the new source of the interference input signal 108 can be negated with immediate results.

The interference terms, included in the desired log-likelihood ratio (LLR) 110, can be provided as an interference bit log-likelihood ratio (LLR) 112, such as a priori interference bit LLR, of an interference channel decoder 114. The interference bit log-likelihood ratio (LLR) 112 is input to the first symbol detector 102 and can be used to negate a portion of the effects of the interference input signal 108 on the desired input signal 104.

The interference bit log-likelihood ratio (LLR) 112 can be designated as "$L^{(A,2,I)}$" and calculated as follows:
MathFigure 2

[Math.2]

$$y = y - H\, s_{soft}^{avg} = h_D s_D + (h_I (s_I - s_I^{avg}) + n)$$

Where in the above equation, the term "$s_{soft}^{avg}$" is a function of the variance of the interference signal from a running average value and the interference channel matrix.

The desired log-likelihood ratio (LLR) 110 can enter a first adder 116, which is coupled to the first symbol detector 102, for further refinement and processing of the desired input signal 104. A desired signal buffer 118, such as a register or a sample and hold circuit, can be coupled to the first adder 116 in order to provide stable-current bit a posteriori LLR information to a desired channel decoder 120 and a second adder 122.

The second adder 122 can combine portions of the output of the desired signal buffer 118 and a desired bit log-likelihood ratio (LLR) 124. The second adder 122 can be coupled to the desired signal buffer 118, the desired channel decoder 120 and a desired bit buffer 126 for combining portions of the desired bit log-likelihood ratio (LLR) 124 and the output of the desired signal buffer 118. The desired bit log-likelihood ratio (LLR) 124 can be can be designated as "$L^{(A,2,D)}$" and calculated as follows:

MathFigure 3

[Math.3]

$$y = y - H\, s_{soft}{}^{avg} = h_I s_I + (h_D (s_D - s_D{}^{avg}) + n)$$

Where in the above equation, the term "$S_{soft}{}^{avg}$" is a function of the variance of the desired signal from a running average value and the desired channel matrix.

The desired bit log-likelihood ratio (LLR) 124 is also coupled to the second symbol detector 106 for providing better identification of the components of the interference input signal 108. It is understood that the components of the interference input signal 108 can include transmissions from an alternate communication source, such as a second eNodeB, the wireless base station, the communication transceiver, or the wireless hot spot and can include the same communication source as the desired input signal 104, but intended for another user equipment (UE) not shown.

The desired bit buffer 126, such as a register or sample and hold circuit, is coupled to the second adder 122. A desired bit *a priori* log-likelihood ratio (LLR) 128 output of the desired bit buffer 126 represents *a priori* LLR information of the decoded or partially decoded bit and is coupled to the first symbol detector 102, the first adder 116, and the second symbol detector 106.

The desired bit *a priori* log-likelihood ratio (LLR) 128 can be identified as "$L^{(a,1,D)}$" and can be calculated as follows:

MathFigure 4

[Math.4]

$$L_{n,m}^{(a,1,D)} = \log \frac{P(b_{n,m}^{D}=+1)}{P(b_{n,m}^{D}=-1)}.$$

Where the term "$L_{n,m}$" is defined as the log-likelihood ratio of the desired bit representing the $n^{th}$ bit of the $m^{th}$ symbol.

The combination of the desired log-likelihood ratio (LLR) 110 and the desired bit *a priori* log-likelihood ratio (LLR) 128 through the first adder presents a desired extrinsic log-likelihood ratio (LLR) 129 to the desired signal buffer 118. The desired extrinsic log-likelihood ratio (LLR) 129 can be designated as "$L^{(ext,1,D)}$" and can be calculated as follows:

MathFigure 5

[Math.5]

$$L^{(ext,1,D)} = L^{(A,1,D)} - L^{(a,1,D)}$$

It has been discovered that the combination of the *a posteriori* LLR information of the desired log-likelihood ratio (LLR) 110 and the desired bit *a priori* log-likelihood ratio (LLR) 128 can provide more than a 7 dB improvement in the desired signal decoding, over the current state of the art, at the lowest code rate of 3G wireless communication. It is understood that as the code rate increases the improvement in the desired signal decoding will increase beyond 7 dB performance margin.

An interference filter 130 can be configured substantially similar to the above described path for the desired input signal 104. The interference input signal 108 can be received by the second symbol detector 106 and when combined with the desired bit *a priori* log-likelihood ratio (LLR) 128, the desired bit log-likelihood ratio (LLR) 124, and an interference bit *a priori* log-likelihood ratio (LLR) 132 can produce the interference log-likelihood ratio (LLR) 134, which can be designated as "$L^{(A,1,I)}$" and calculated as follows:

MathFigure 6

[Math.6]

$$L_{n,m}^{(A,1,I)} = \log \frac{P(b_{n,m}^{I}=+1|y)}{P(b_{n,m}^{I}=-1|y)}$$

The second symbol detector 106 is coupled to a third adder 136, which receives input from the interference bit *a priori* log-likelihood ratio (LLR) 132 and the interference log-likelihood ratio (LLR) 134 in order to generate the interference extrinsic log-likelihood ratio 138 which can be designated as "L$^{(ext,1,I)}$" and can be calculated as follows: MathFigure 7

[Math.7]

$$L^{(ext,1,I)} = L^{(A,1,I)} - L^{(a,1,I)}$$

An interference buffer 140, such as a register or a sample and hold circuit, can be coupled to the third adder 136 in order to provide stable current interference bit *a posteriori* LLR information to the interference channel decoder 114 and a fourth adder 142.

The fourth adder 142 is coupled to an interference bit buffer 144, represents *a priori* LLR information of the decoded or partially decoded interference and is coupled to the first symbol detector 102, the third adder 136, and the second symbol detector 106. It is understood that the iterative detection and decode of the interference input signal 108 provides a forward error correction of the interference channel that can degrade the desired input signal 104. By feeding back the interference bit *a priori* log-likelihood ratio (LLR) 132, the first symbol detector 102 can immediately start to negate the adverse effects of the interference input signal 108.

It has been discovered that the joint multiple-in-multiple?out process of the first symbol detector 102 can provide a 7dB improvement in the ability of the desired channel decoder 120 to pass a decoded bit 148 to a threshold detector 150. The output of the threshold detector 150 can be a filtered received bit 152 for input to a receiver (not shown).

Thus, it has been discovered that the wireless communication system and device of the present invention furnishes important and heretofore unknown and unavailable solutions, capabilities, and functional aspects for wireless communication in a region with interference sources. It is understood that while a single channel decode has been discussed, more than one channel can be concurrently supported by the wireless communication system 100.

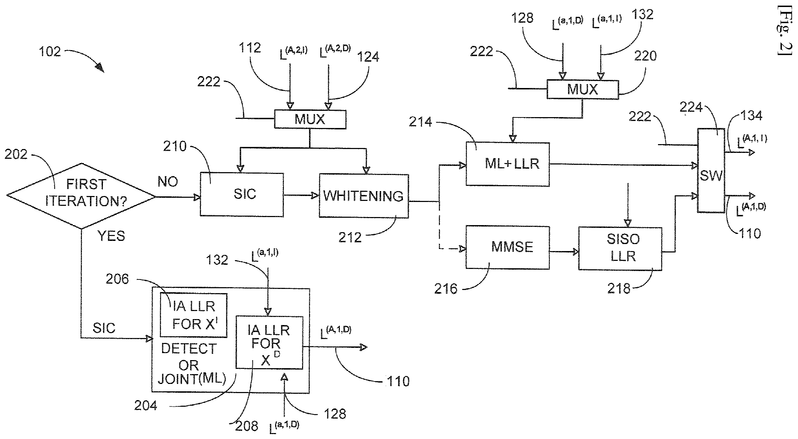

Referring now to FIG. 2, therein is shown a functional block diagram of the first symbol detector 102 of FIG. 1. The functional block diagram of the first symbol detector 102 depicts a first iteration decision module 202 coupled to a joint maximum likelihood (ML) detector 204. The joint maximum likelihood (ML) detector 204 can include a first interference aware log-likelihood ratio module 206 and a second interference aware log-likelihood ratio module 208.

The first interference aware log-likelihood ratio module 206 can calculate the interference log-likelihood ratio (LLR) 134 of FIG. 1 for providing a filter to negate the interference received with the desired input signal 104 of FIG. 1. The second interference aware log-likelihood ratio module 208 can calculate the desired log-likelihood ratio (LLR) 110 while receiving updates from the desired bit *a priori* log-likelihood ratio (LLR) 128 and the interference bit *a priori* log-likelihood ratio (LLR) 132.

During a first iteration of filtering the joint maximum likelihood (ML) detector 204 can calculate the desired log-likelihood ratio (LLR) 110 as a starting point of the process to negate the effects of the interference input signal 108 of FIG. 1. On any subsequent iteration of the filtering process, a successive interference cancellation (SIC) module 210 can receive the desired log-likelihood ratio (LLR) 110 and apply the desired bit a priori log-likelihood ratio (LLR) 128.

LLRs are divided into three types: *a priori, a posteriori* and extrinsic LLRs. Since these LLRs are equivalent to bit or symbol probabilities, the desired channel decoder 120 can provide the desired log-likelihood ratio (LLR) 110 in order to generate the soft estimate for the decoded bit 148 and the desired bit log-likelihood ratio (LLR) 124 for refining the filtering process.

The successive interference cancellation (SIC) module 210 can manipulate the desired input signal 104, such as the original received base-band signal. The interference bit log-likelihood ratio (LLR) 112 is subtracted from the then desired input signal 104. The successive interference cancellation (SIC) module 210 is coupled to an interference whitening module 212, which performs the next level of filtering.

The interference whitening module 212 can reduce the effective noise level of the desired log-likelihood ratio (LLR) 110 by receiving the output from the successive interference cancellation (SIC) module 210 then multiplying with the corresponding channel matrix can be calculated as follows: MathFigure 8

[Math.8]

$$y = \sqrt{P_D}H^D x^D + \sqrt{P_I}H^I(x^I - x^I_{avg}) + n = \sqrt{P_D}H^D x^D + n_v$$

The term "P(*)" is defined as the transmit power of the incoming signal.

The term "H*" is defined as the channel matrix of the incoming signal.

The term "D" refers to the incoming desired signal.

The term "I" refers to the incoming interference signal.

The term "y" represents the incoming base band signal at a sample time.

The interference whitening module 212 can be implemented to enhance the execution overhead by estimating the multiplying with the corresponding channel matrix can be calculated as follows:

MathFigure 9

[Math.9]

$$\tilde{y} = R_{vv}^{-\frac{1}{2}}y = R_{vv}^{-\frac{1}{2}}\sqrt{P_D}H^D x^D + \bar{n}$$

Where the variance of matrix nv is represented by:

MathFigure 10

[Math.10]

$$R_{vv} = P_D H^D Q H^D + \sigma I$$

The term Q is the covariance matrix if the soft estimate.

The whitening of the interference related to the desired data can provide a substantial increase in overall performance and error rate of the desired data. It has been discovered that the iterative detection and decoding process can provide an additional 7dB of usable signal at the lowest data rate and increased margin at higher data rates.

The interference whitening module 212 can be coupled to a maximum-likelihood detector module 214. The maximum-likelihood detector module 214 can calculate the soft data estimation for each iteration of the iterative detection and decode process. The desired input signal 104 can be expressed mathematically as:

MathFigure 11

[Math.11]

$$y = \sqrt{P_D}H^D x^D + \sqrt{P_I}H^I x^I + n$$

Where y is the instantaneous value of the base band input data.

The maximum-likelihood detector module 214 can provide a soft estimate of the actual received data that is refined with each iteration of the process. The maximum-likelihood detector module 214 can be a linear equalizer, a decision-feedback equalizer (DFE), or any equalizer that utilizes the interference bit *a priori* log-likelihood ratio (LLR) 132 or the desired bit *a priori* log-likelihood ratio (LLR) 128 for generating soft estimate of the actual received data.

Alternatively, the interference whitening module 212 can be coupled to a minimum mean squared error (MMSE) detector 216. The minimum mean squared error (MMSE) detector 216 can analyze the desired bit *a priori* log-likelihood ratio (LLR) 128 and the whitened interference data received from the interference whitening module 212 in order to provide input to a single-in-single-out detector 218. The single-in-single-out detector 218 applies the desired bit *a priori* log-likelihood ratio (LLR) 128 to the output of the minimum mean squared error (MMSE) detector 216 in order to provide an updated and refined version of the desired bit *a priori* log-likelihood ratio (LLR) 128. With each iteration the interference is minimized.

It has been discovered that the symbol detector 102 can provide decoding for the desired input signal 104 as well as the interference input signal 108 on successive iterations. This aspect of the invention is provided by an iteration multiplexer 220 that can select the appropriate version of the log-likelihood ratio for decoding the desired input signal 104 or the interference input signal 108 in successive iterations.

A decode select line 222 can configure the symbol detector 102 to decode the desired input signal 104 or the interference input signal 108. The decode select line 222 is also coupled to a decode switch 224. The decode switch 224 can drive the desired log-likelihood ratio (LLR) 110 or the interference log-likelihood ratio (LLR) 134 based on the state of the decode select line 222.

By way of an example, on an odd numbered iteration after the first iteration the desired input signal would be decoded. The decode select line 222 would select the interference bit log-likelihood ratio (LLR) 112 through the iteration multiplexer 220 as the input to the successive interference cancellation (SIC) module 210 and the interference whitening module 212. Another portion of the iteration multiplexer 220 would select the desired bit *a priori* log-likelihood ratio (LLR) 128 as the input to the maximum-likelihood detector module 214 and the single-in-single-out detector 218. In this configuration the decode switch 224 can drive the desired log-likelihood ratio (LLR) 110.

Also by way of example, on an even numbered iteration the interference signal would be decoded. The decode select line 222 would select the desired bit log-likelihood ratio (LLR) 124 through the iteration multiplexer 220 as the input to the successive interference cancellation (SIC) module 210 and the interference whitening module 212. The other portion of the iteration multiplexer 220 would select the interference bit *a priori* log-likelihood ratio (LLR) 132 as the input to the maximum-likelihood detector module 214 and the single-in-single-out detector 218. In this configuration the decode switch 224 can drive the interference log-likelihood ratio (LLR) 134. It is understood that the above example is one possible implementation that could reduce the hardware complexity, but it is not intended to limit the invention.

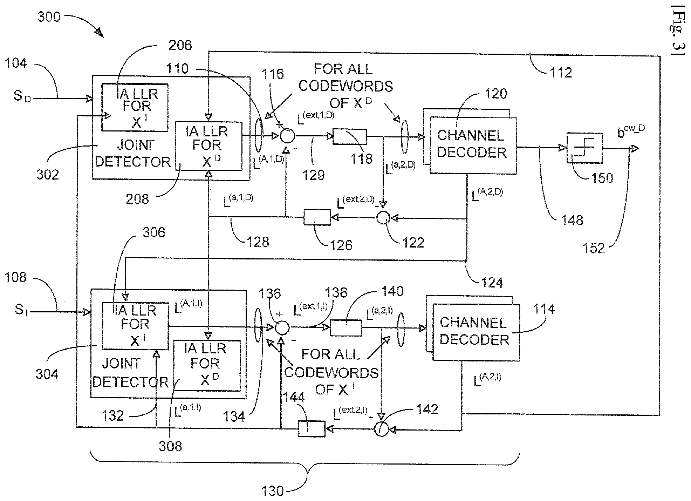

Referring now to FIG. 3, therein is shown a hardware block diagram of a wireless communication system 300 in a second embodiment of the present invention. The hardware block diagram of the wireless communication system 300 depicts a first symbol detector 302, such as a joint multiple input multiple output (J-MIMO) detector, maximum likelihood (ML) detector with interference whitening, or a minimum mean square error (MMSE) detector with interference whitening followed by single-in-single-out (SISO) LLR block, for receiving the desired input signal 104. A second symbol detector 304, such as a multiple input multiple output (MIMO) detector, for receiving the interference input signal 108 that corresponds to the desired input signal 104.

The first symbol detector 302 can include the first interference aware log-likelihood ratio module 206 and the second interference aware log-likelihood ratio module 208. The first interference aware log-likelihood ratio module 206 can calculate the interference log-likelihood ratio (LLR) 134 for providing a filter to negate the interference received with the desired input signal 104. The second interference aware log-likelihood ratio module 208 can calculate the desired log-likelihood ratio (LLR) 110 while receiving updates from the desired bit *a priori* log-likelihood ratio (LLR) 128 and the interference bit *a priori* log-likelihood ratio (LLR) 132.

The second symbol detector 304 can include a third interference aware log-likelihood ratio module 306 and the fourth interference aware log-likelihood ratio module 308. The third interference aware log-likelihood ratio module 306 can calculate the interference log-likelihood ratio (LLR) 134 for providing a filter to negate the interference received with the desired input signal 104. The fourth interference aware log-likelihood ratio module 308 can calculate the desired log-likelihood ratio (LLR) 110 while receiving updates from the desired bit *a priori* log-likelihood ratio (LLR) 128 and the interference bit *a priori* log-likelihood ratio (LLR) 132.

The desired input signal 104 is defined as the selected base band input frequency and signal amplitude from a communication source, such as an eNodeB, a wireless base station, a communication transceiver, or a wireless hot spot. The desired input signal 104 can be degraded by the presence of the interference input signal 108. The interference input signal 108 is defined as the frequency and the signal amplitude, from any electrical source, that enters the wireless communication system 300 at the same time as the desired input signal 104. The interference input signal 108 can be generated by any transmission source including a second eNodeB, others of the wireless base station, a second communication transceiver, or others of the wireless hot spot.

In order to properly decode the desired input signal 104, the effects of the interference input signal 108 must be negated or reduced. The first symbol detector 302 outputs the desired log-likelihood ratio (LLR) 110, such as *a posteriori* LLR of the desired signal. The desired log-likelihood ratio (LLR) 110 can be calculated by:
MathFigure 12

[Math.12]

$$
\begin{aligned}
L_{n,m}^{(A,1,D)} &= \log \frac{P\left(b_{n,m}^{D} = +1 \middle| y\right)}{P\left(b_{n,m}^{D} = -1 \middle| y\right)} \\
&= \log \frac{\sum_{b^{D} \in \left\{b_{n,j}^{D} = +1\right\}, b^{I}} P(y|b^{D}b^{I}) P\left(\frac{1}{2} b^{D} L_{n}^{(a,1,D)} + \frac{1}{2} b^{I} L_{n}^{(a,1,I)}\right)}{\sum_{b^{D} \in \left\{b_{n,j}^{D} = -1\right\}, b^{I}} P(y|b^{D}b^{I}) P\left(\frac{1}{2} b^{D} L_{n}^{(a,1,D)} + \frac{1}{2} b^{I} L_{n}^{(a,1,I)}\right)} \\
&\approx \max_{\theta \in \left\{b_{n,j}^{D} = +1\right\}, b^{I}} \left(-\frac{1}{\sigma_{n}^{2}} \left\|y - \sqrt{P_{D}} H^{D} \bar{\theta}^{D} + \sqrt{P_{I}} H^{I} x^{I}\right\| + \frac{1}{2} b^{D} L_{n}^{(a,1,D)} + \frac{1}{2} b^{I} L_{n}^{(a,1,I)}\right) \\
&\quad - \max_{\theta \in \left\{b_{n,j}^{D} = -1\right\}, b^{I}} \left(-\frac{1}{\sigma_{n}^{2}} \left\|y - \sqrt{P_{D}} H^{D} \bar{\theta}^{D} + \sqrt{P_{I}} H^{I} x^{I}\right\| + \frac{1}{2} b^{D} L_{n}^{(a,1,D)}\right. \\
&\quad \left. + \frac{1}{2} b^{I} L_{n}^{(a,1,I)}\right)
\end{aligned}
$$

Where:

The term "P(*)" is defined as the transmit power of the incoming signal.

The term "H*" is defined as the channel matrix of the incoming signal, where "D" indicates the incoming desired signal and "I" indicates the incoming interference signal.

The term "$b_{n,m}$" is defined as the bipolar bits representing the $n^{th}$ bit of the $m^{th}$ symbol.

The term "y" represents the incoming base band signal at a sample time.

The interference terms, included in the desired log-likelihood ratio (LLR) 110, can be provided as the interference bit log-likelihood ratio (LLR) 112, such as a priori interference bit LLR, of the interference channel decoder 114. The interference bit log-likelihood ratio (LLR) 112 is input to the first symbol detector 302 and can be used to negate a portion of the effects of the interference input signal 108 on the desired input signal 104.

The interference bit log-likelihood ratio (LLR) 112 can be designated as "$L^{(A,2,I)}$" and calculated as follows:
MathFigure 13

[Math.13]

$$y = y - H \, s_{soft}{}^{avg} = h_D s_D + (h_I (s_I - s_I{}^{avg}) + n)$$

Where in the above equation, the term "$S_{soft}{}^{avg}$" is a function of the variance of the interference signal from a running average value and the interference channel matrix.

The desired log-likelihood ratio (LLR) 110 can enter the first adder 116, which is coupled to the first symbol detector 302, for further refinement and processing of the desired input signal 104. The desired signal buffer 118, such as a register or a sample and hold circuit, can be coupled to the first adder 116 in order to provide stable current bit a posteriori LLR information to the desired channel decoder 120 and the second adder 122.

The second adder 122 can combine portions of the output of the desired signal buffer 118 and the desired bit log-likelihood ratio (LLR) 124. The second adder 122 can be coupled to the desired signal buffer 118, the desired channel decoder 120 and the desired bit buffer 126 for combining portions of the desired bit log-likelihood ratio (LLR) 124 and the output of the desired signal buffer 118. The desired bit log-likelihood ratio (LLR) 124 can be can be designated as "$L^{(A,2,D)}$" and calculated as follows:
MathFigure 14

[Math.14]
$$y = y - H \, s_{soft}{}^{avg} = h_I s_I + (h_D (s_D - s_D{}^{avg}) + n)$$

Where in the above equation, the term "$S_{soft}{}^{avg}$" is a function of the variance of the desired signal from a running average value and the desired channel matrix.

The desired bit log-likelihood ratio (LLR) 124 is also coupled to the second symbol detector 304 for providing better identification of the components of the interference input signal 108. It is understood that the components of the interference input signal 108 can include transmissions from an alternate communication source, such as a second eNodeB, the wireless base station, the communication transceiver, or the wireless hot spot and can include the same communication source as the desired input signal 104, but intended for another user equipment (UE) not shown.

The desired bit buffer 126, such as a register or sample and hold circuit, is coupled to the second adder 122. The desired bit a priori log-likelihood ratio (LLR) 128 output of the desired bit buffer 126 represents a priori LLR information of the decoded or partially decoded bit and is coupled to the first symbol detector 302, the first adder 116, and the second symbol detector 304.

The desired bit a priori log-likelihood ratio (LLR) 128 can be identified as "$L^{(a,1,D)}$" and can be calculated as follows:
MathFigure 15

[Math.15]
$$L_{n,m}^{(a,1,D)} = \log \frac{P(b_{n,m}^D = +1)}{P(b_{n,m}^D = -1)}.$$

Where the term "$L_{n,m}$" is defined as the log-likelihood ratio of the desired bit representing the $n^{th}$ bit of the $m^{th}$ symbol.

The combination of the desired log-likelihood ratio (LLR) 110 and the desired bit a priori log-likelihood ratio (LLR) 128 through the first adder presents a desired extrinsic log-likelihood ratio (LLR) 129 to the desired signal buffer 118. The desired extrinsic log-likelihood ratio (LLR) 129 can be designated as "$L^{(ext,1,D)}$" and can be calculated as follows: MathFigure 16

[Math.16]

$$L^{(ext,1,D)} = L^{(A,1,D)} - L^{(a,1,D)}$$

It has been discovered that the combination of the *a posteriori* LLR information of the desired log-likelihood ratio (LLR) 110 and the desired bit *a priori* log-likelihood ratio (LLR) 128 can provide more than a 7 dB improvement in the desired signal decoding, over the current state of the art, at the lowest code rate of 3G wireless communication. It is understood that as the code rate increases the improvement in the desired signal decoding will increase beyond 7 dB performance margin.

The interference filter 130 can be configured substantially similar to the above described path for the desired input signal 104. The interference input signal 108 can be received by the second symbol detector 304 and when combined with the desired bit *a priori* log-likelihood ratio (LLR) 128, the desired bit log-likelihood ratio (LLR) 124, and the interference bit *a priori* log-likelihood ratio (LLR) 132 can produce the interference log-likelihood ratio (LLR) 134, which can be designated as "$L^{(A,1,I)}$" and calculated as follows:
MathFigure 17

[Math.17]

$$L_{n,m}^{(A,1,I)} = \log \frac{P(b_{n,m}^I = +1|y)}{P(b_{n,m}^I = -1|y)}$$

The second symbol detector 304 is coupled to the third adder 136, which receives input from the interference bit *a priori* log-likelihood ratio (LLR) 132 and the interference log-likelihood ratio (LLR) 134 in order to generate the interference extrinsic log-likelihood ratio 138 which can be designated as "$L^{(ext,1,I)}$" and can be calculated as follows: MathFigure 18

[Math.18]

$$L^{(ext,1,I)} = L^{(A,1,I)} - L^{(a,1,I)}$$

The interference buffer 140, such as a register or a sample and hold circuit, can be coupled to the third adder 136 in order to provide stable current interference bit *a posteriori* LLR information to the interference channel decoder 114 and the fourth adder 142.

The fourth adder 142 is coupled to the interference bit buffer 144, represents *a priori* LLR information of the decoded or partially decoded interference and is coupled to the first symbol detector 302, the third adder 136, and the second symbol detector 304. It is understood that the iterative detection and decode of the interference input signal 108 provides a forward error correction of the interference channel that can degrade the desired input signal 104. By feeding back the interference bit *a priori* log-likelihood ratio (LLR) 132, the first symbol detector 302 can immediately start to negate the adverse effects of the interference input signal 108.

It has been discovered that the joint multiple-in-multiple Pout process of the first symbol detector 302 can provide a 7dB improvement in the ability of the desired channel decoder 120 to pass the decoded bit 148 to the threshold detector 150. The output of the threshold detector 150 can be the filtered received bit 152 for input to a receiver (not shown).

Thus, it has been discovered that the wireless communication system and device of the present invention furnishes important and heretofore unknown and unavailable solutions, capabilities, and functional aspects for wireless communication in a region with interference sources. It is understood that while a single channel decode has been discussed, more than one channel can be concurrently supported by the wireless communication system 300.

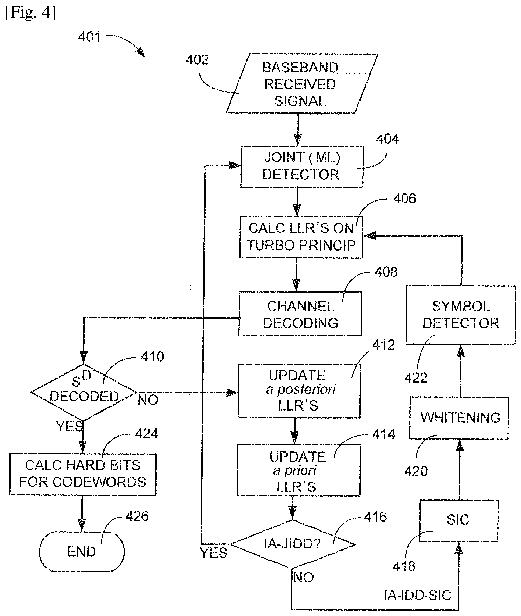

Referring now to FIG. 4, therein is shown a flow chart of a joint iterative detection and decode process 401. The flow chart of the joint iterative detection and decode process 401 depicts an input signal received block 402 indicating that a baseband input signal has been input to the desired input signal 104 of FIG. 1. This event marks the beginning of a string of bits or symbols that constitute a wireless message or content.

The flow proceeds to a joint detector block 404 where the generation of *a posteriori* LLR's, extrinsic LLR's, and *a priori* LLR's is initiated. The *a posteriori* LLR's, extrinsic LLR's, and *a priori* LLR's are processed for the desired input signal 104 as well as the interference input signal 108 of FIG. 1. The flow then proceeds to a calculate LLR's block 406.

The calculate LLR's block 406 can utilize turbo code principles of forward error correction to verify there is sufficient margin in the data over the interference in order to successfully read the data from the desired input signal 104. The flow then proceeds to a channel decoding block 408.

The channel decoding block 408 must verify that a sufficient amount of the interference input signal 108 has been negated in order to clearly identify the bits of the wireless message or content. The channel decoding block 408 can pass an indication to a desired signal decoded block 410.

The desired signal decoded block 410 is a decision block that determines whether the process should iterate in order to reefing the *a posteriori* LLR's, extrinsic LLR's, and *a priori* LLR's in order to more completely negate the interference input signal 108. If it is determined that the process should be iterated, the flow proceeds to an update *a posteriori* LLR's block 412.

The update *a posteriori* LLR's block 412 causes the update by actuating the desired bit buffer 126 of FIG. 1 and the interference bit buffer 144 of FIG. 1. The actuation of these buffers allows the *a posteriori* LLR's to be updated based on their current conditions. It is understood that both the *a posteriori* LLR's for the desired input signal 104 and the interference input signal 108 are updated by this process. The flow then proceeds to an update *a priori* LLR's block 414.

The update *a priori* LLR's block 414 causes the update by actuating the desired signal buffer 118 of FIG. 1 and the interference buffer 140 of FIG. 1. The actuation of these buffers allows the *a priori* LLR's to be updated based on their current conditions. It is understood that both the *a priori* LLR's for the desired input signal 104 and the interference input signal 108 are updated by this process. The flow then proceeds to an interference-aware Joint IDD decision block 416.

The interference-aware Joint IDD decision block 416 must determine whether the process is utilizing the joint maximum likelihood (ML) detector 204 or a combination of the successive interference cancellation (SIC) module 210, the interference whitening module 212, and a symbol detector. If the is utilizing the joint maximum likelihood (ML) detector 204 the iteration is executed by the flow proceeding to the joint detector block 404. If however the process is not using the joint maximum likelihood (ML) detector 204 the flow proceeds to a successive interference cancellation block 418.

The successive interference cancellation block 418 can activate the successive interference cancellation (SIC) module 210, which accepts the interference bit log-likelihood ratio (LLR) 112 of FIG. 1, that has been refined by the update of the *a posteriori* LLR's and the *a priori* LLR's. The flow then proceeds to a whitening block 420.

The whitening block 420 can activate the interference whitening module 212 in order to further reduce the level of interference that can degrade the desired input signal 104. The interference whitening module 212 uses the updated values of the *a posteriori* LLR's and the *a priori* LLR's for the further filtering of the interference input signal 108. The flow then proceeds to a symbol detector block 422

The symbol detector block 422 receives the reduced interference matrix from the whitening block 420 and applies the updated value of the desired bit *a priori* log-likelihood ratio (LLR) 128 of FIG. 1. The flow then proceeds to the calculate LLR's block 406 to complete the iteration.

If the desired signal decoded block 410 determines that there is sufficient margin to read the bits from the desired input signal 104, the flow proceeds to a calculate hard bits block 424.

The calculate hard bits block 424 can activate the receiver function (not shown) in order to receive the hard bits of the code word that constitute the higher level content of the message. The flow then proceeds to an end block 426 to complete the processing.

It is understood that the final values for the *a posteriori* LLR's, extrinsic LLR's, and *a priori* LLR's for a first code word processing can be the initial values for a subsequent processing of a new code word. This can also apply for multiple channel input where all of the desired inputs are subjected to the same interference channels and thus can share the processed values of the *a posteriori* LLR's, extrinsic LLR's, and *a priori* LLR's in order to expedite the filtering process.

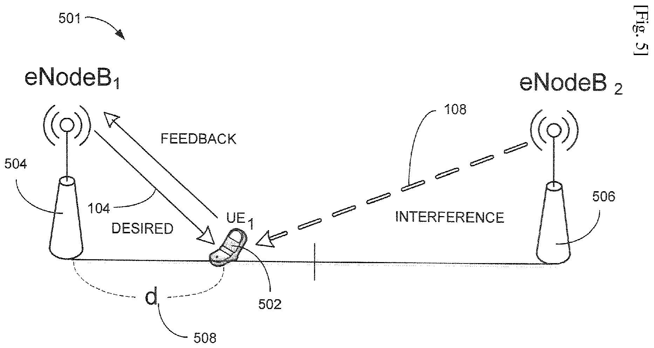

Referring now to FIG. 5, therein is shown a functional block diagram of an application 501 of the wireless communication system 100 of FIG. 1. The functional block diagram of an application 501 of the wireless communication system 100 depicts a user equipment 502 receiving the desired input signal 104 from a first communication source 504, such as an eNodeB, a wireless base station, a communication transceiver, or a wireless hot spot. The user equipment 502 is depicted as a cell phone but this is by way of an example. The user equipment 502 can be a mobile computer, an automobile, or a personal communication device.

A second communication source 506 can transmit the interference input signal 108 that is unintentionally received by the user equipment 502. As the user equipment 502 moves toward the second communication source 506 the strength of the desired input signal 104 can be reduced in amplitude as a function of the distance 508 from the first communication source 504, while the interference input signal 108 is increasing.

It has been discovered that the wireless communication system 100 can provide a minimum of 7dB increase in signal to noise ratio at 1% packet error rate. The resultant reduction in switching between the first communication source 504 and the second communication source 506 provides a higher probability that the communication flow will not be interrupted. When a switch between the first communication source 504 and the second communication source 506 occurs, the user equipment 502 will be much closer to the second communication source 506 and the user equipment will receive a stronger signal. This is primarily due to the fact that the amplitude of the desired input signal is inversely proportional to the distance 508 squared.

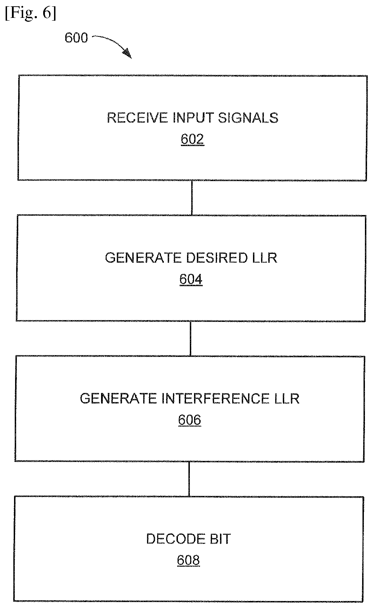

Referring now to FIG. 6, therein is shown a flow chart of a method 600 of operation of the wireless communication system 100 in a further embodiment of the present invention. The method 600 includes: receiving a desired input signal and an interference input signal in a block 602; activating a first symbol detector for generating a desired log-likelihood ratio from the desired input signal in a block 604; activating a second symbol detector for generating an interference log-likelihood ratio from the interference input signal in a block 606; and jointly decoding a decoded bit by iteratively refining the interference log-likelihood ratio for negating the interference input signal and iteratively refining the desired log-likelihood ratio for enhancing the desired input signal in a block 608.

The resulting method, process, apparatus, device, product, and/or system is straightforward, cost-effective, uncomplicated, highly versatile and effective, can be surprisingly and unobviously implemented by adapting known technologies, and are thus readily suited for efficiently and economically manufacturing and operating wireless communication systems fully compatible with conventional manufacturing methods or processes and technologies. The resulting method, process, apparatus, device, product, and/or system is straightforward, cost-effective, uncomplicated, highly versatile, accurate, sensitive, and effective, and can be implemented by adapting known components for ready, efficient, and economical manufacturing, application, and utilization.

Another important aspect of the present invention is that it valuably supports and services the historical trend of reducing costs, simplifying systems, and increasing performance.

These and other valuable aspects of the present invention consequently further the state of the technology to at least the next level.

While the invention has been described in conjunction with a specific best mode, it is to be understood that many alternatives, modifications, and variations will be apparent to those skilled in the art in light of the aforegoing description. Accordingly, it is intended to embrace all such alternatives, modifications, and variations that fall within the scope of the included claims. All matters hithertofore set forth herein or shown in the accompanying drawings are to be interpreted in an illustrative and non-limiting sense.

## Claims

1.  A method of operation of a wireless communication system, comprising:

    receiving (600) a desired input signal (104) and an interference input signal (108);
    activating a first symbol detector (102) for generating (604) a desired log-likelihood ratio (110) from the desired input signal by activating a joint maximum likelihood detector for generating the desired log-likelihood ratio on a first iteration and activating a successive interference cancellation module (210) on any subsequent iteration for refining the desired log-likelihood ratio;
    activating a second symbol detector (106) for generating (606) an interference log-likelihood ratio (134) from the interference input signal; and
    jointly decoding a decoded bit by:

    iteratively refining the interference log-likelihood ratio (134) for negating the interference input signal (108), by coupling an interference bit a priori log-likelihood ratio (132) to the first symbol detector (102) and the second symbol detector (106) and generating the interference bit a priori log-likelihood ratio (132) from the interference log-likelihood ratio (134),
    wherein the method is **characterised by** switching between the desired input signal (104) and the interference input signal (106) when a user equipment moves towards a communication source of the interference input signal (106).

2.  The method as claimed in claim 1, further comprising:

    activating the successive interference cancellation module for iteratively refining the interference log-likelihood ratio; and
    activating an interference whitening module (212) for negating the interference input signal.

3.  The method as claimed in claim 1, further comprising:

updating (412) a posteriori LLR's and updating (414) a priori LLR's for jointly decoding the decoded bit.

4. A wireless communication system, comprising:

a first symbol detector (302) for receiving a desired input signal;
a second symbol detector (304) for receiving an interference input signal;
a first interference aware log-likelihood ratio module (206), in the first symbol detector, for generating a desired log-likelihood ratio from the desired input signal by activating a joint maximum likelihood detector for generating the desired log-likelihood ratio on a first iteration and activating a successive interference cancellation module (210) on any subsequent iteration for refining the desired log-likelihood ratio; and
a second interference aware log-likelihood ratio module (306), in the second symbol detector, for generating an interference log-likelihood ratio from the interference input signal and jointly decoding a decoded bit by:

iteratively refining the interference log-likelihood ratio (134) for negating the interference input signal (108), by coupling an interference bit a priori log-likelihood ratio (132) to the first symbol detector (102) and the second symbol detector (106) and generating the interference bit a priori log-likelihood ratio (132) from the interference log-likelihood ratio (134),
wherein the wireless communication system is **characterised by** switching between the desired input signal (104) and the interference input signal (106) when a user equipment moves towards a communication source of the interference input signal (106).

5. The system as claimed in claim 4, wherein the first interference aware log-likelihood ratio module includes a desired bit signal buffer for refining the desired log-likelihood ratio.

6. The system as claimed in claim 4, further comprising:
an interference whitening module in the first symbol detector for negating the interference input signal.

7. The system as claimed in claim 4, further comprising a desired bit buffer (126) for updating a posteriori LLR's.

8. The system as claimed in claim 4, wherein the second interference aware log-likelihood ratio module includes an interference channel decoder.

9. The system as claimed in claim 4, wherein the first symbol detector is a minimum mean squared error detector coupled to a single-in-single-out detector.

10. The system as claimed in claim 4, further comprising:
a desired signal buffer coupled to a desired channel decoder for updating a priori LLR's.

**Patentansprüche**

1. Verfahren zum Betrieb eines drahtlosen Kommunikationssystems, das Folgendes umfasst:

Empfangen (600) eines gewünschten Eingabesignals (104) und eines Interferenzeingabesignals (108);
Aktivieren eines ersten Symboldetektors (102) zum Erzeugen (604) eines gewünschten Log-Likelihood-Verhältnisses (110) aus dem gewünschten Eingabesignal durch Aktivieren eines gemeinsamen Maximum-Likelihood-Detektors zum Erzeugen des gewünschten Log-Likelihood-Verhältnisses bei einer ersten Iteration und Aktivieren eines sukzessiven Interferenzunterdrückungsmoduls (210) bei jeder nachfolgenden Iteration zum Verfeinern des gewünschten Log-Likelihood-Verhältnisses;
Aktivieren eines zweiten Symboldetektors (106) zum Erzeugen (606) eines Interferenz-Log-Likelihood-Verhältnisses (134) aus dem Interferenzeingabesignal; und
gemeinsames Decodieren eines decodierten Bits durch:

iteratives Verfeinern des Interferenz-Log-Likelihood-Verhältnisses (134) zum Negieren des Interferenzeingabesignals (108) durch Koppeln eines Interferenzbit-a-priori-Log-Likelihood-Verhältnisses (132) mit dem ersten Symboldetektor (102) und dem zweiten Symboldetektor (106) und Erzeugen des Interferenzbit-a-priori-Log-Likelihood-Verhältnisses (132) aus dem Interferenz-Log-Likelihood-Verhältnis (134),
wobei das Verfahren durch Umschalten zwischen dem gewünschten Eingabesignal (104) und dem Interferenzeingabesignal (106) gekennzeichnet ist, wenn sich ein Benutzergerät in Richtung einer Kommunikationsquelle des Interferenzeingabesignals (106) bewegt.

2. Verfahren nach Anspruch 1, das ferner Folgendes umfasst:

Aktivieren des sukzessiven Interferenzunterdrückungsmoduls zum iterativen Verfeinern des Interferenz-Log-Likelihood-Verhältnisses; und
Aktivieren eines Interferenz-Whitening-Moduls (212) zum Negieren des Interferenzeingabesignals.

3. Verfahren nach Anspruch 1, das ferner Folgendes umfasst:
Aktualisieren (412) des A-posteriori-LLR und Aktualisieren (414) des A-priori-LLR zum gemeinsamen Decodieren des decodierten Bits.

4. Drahtloses Kommunikationssystem, das Folgendes umfasst:

einen ersten Symboldetektor (302) zum Empfangen eines gewünschten Eingabesignals;
einen zweiten Symboldetektor (304) zum Empfangen eines Interferenzeingabesignals;
ein erstes interferenzbewusstes Log-Likelihood-Verhältnis-Modul (206) in dem ersten Symboldetektor zum Erzeugen eines gewünschten Log-Likelihood-Verhältnisses aus dem gewünschten Eingabesignal durch Aktivieren eines gemeinsamen Maximum-Likelihood-Detektors zum Erzeugen des gewünschten Log-Likelihood-Verhältnisses bei einer ersten Iteration und Aktivieren eines sukzessiven Interferenzunterdrückungsmoduls (210) bei jeder nachfolgenden Iteration zum Verfeinern des gewünschten Log-Likelihood-Verhältnisses; und
ein zweites interferenzbewusstes Log-Likelihood-Verhältnis-Modul (306) in dem zweiten Symboldetektor zum Erzeugen eines Interferenz-Log-Likelihood-Verhältnisses aus dem Interferenzeingabesignal und gemeinsamen Decodieren eines decodierten Bits durch:

iteratives Verfeinern des Interferenz-Log-Likelihood-Verhältnisses (134) zum Negieren des Interferenzeingabesignals (108) durch Koppeln eines Interferenzbit-a-priori-Log-Likelihood-Verhältnisses (132) mit dem ersten Symboldetektor (102) und dem zweiten Symboldetektor (106) und Erzeugen des Interferenzbit-a-priori-Log-Likelihood-Verhältnisses (132) aus dem Interferenz-Log-Likelihood-Verhältnis (134),
wobei das drahtlose Kommunikationssystem durch Umschalten zwischen dem gewünschten Eingabesignal (104) und dem Interferenzeingabesignal (106) gekennzeichnet ist, wenn sich ein Benutzergerät in Richtung einer Kommunikationsquelle des Interferenzeingabesignals (106) bewegt.

5. System nach Anspruch 4, wobei das erste interferenzbewusste Log-Likelihood-Verhältnis-Modul einen gewünschten Bit-Signalpuffer zum Verfeinern des gewünschten Log-Likelihood-Verhältnisses enthält.

6. System nach Anspruch 4, das ferner Folgendes umfasst:
ein Interferenz-Whitening-Modul in dem ersten Symboldetektor zum Negieren des Interferenzeingabesignals.

7. System nach Anspruch 4, das ferner einen gewünschten Bitpuffer (126) zum Aktualisieren des A-posteriori-LLR umfasst.

8. System nach Anspruch 4, wobei das zweite interferenzbewusste Log-Likelihood-Verhältnis-Modul einen Interferenzkanaldecoder enthält.

9. System nach Anspruch 4, wobei der erste Symboldetektor ein Detektor für den kleinsten mittleren quadratischen Fehler ist, der mit einem Single-in-Single-out-Detektor gekoppelt ist.

10. System nach Anspruch 4, das ferner Folgendes umfasst:
einen gewünschten Signalpuffer, der mit einem gewünschten Kanaldecoder zum Aktualisieren des A-priori-LLR gekoppelt ist.

**Revendications**

1. Procédé de fonctionnement d'un système de communication sans fil, comprenant :

recevoir (600) un signal d'entrée souhaité (104) et un signal d'entrée d'interférence (108) ;

activer un premier détecteur de symboles (102) pour générer (604) un rapport log-vraisemblance (LLR) souhaité (110) à partir du signal d'entrée souhaité en activant un détecteur de maximum de vraisemblance conjoint pour générer le rapport log-vraisemblance souhaité sur une première itération et en activant un module d'annulation d'interférence successif (210) sur toute itération successive pour affiner le rapport log-vraisemblance souhaité ;

activer un deuxième détecteur de symboles (106) pour générer (606) un rapport log-vraisemblance d'interférence (134) à partir du signal d'entrée d'interférence ; et

décoder conjointement un bit décodé en :

affinant itérativement le rapport log-vraisemblance d'interférence (134) pour annuler le signal d'entrée d'interférence (108), en accouplant un rapport log-vraisemblance a priori de bit d'interférence (132) au premier détecteur de symboles (102) et au deuxième détecteur de symboles (106) et en générant le rapport log-vraisemblance a priori de bit d'interférence (132) à partir du rapport log-vraisemblance d'interférence (134),

où le procédé est **caractérisé par** la commutation entre le signal d'entrée souhaité (104) et le signal d'entrée d'interférence (106) lorsqu'un équipement d'utilisateur se déplace vers une source de communication du signal d'entrée d'interférence (106).

2. Procédé selon la revendication 1, comprenant en outre :

activer le module d'annulation d'interférence successif pour affiner itérativement le rapport log-vraisemblance d'interférence ; et

activer un module de blanchiment d'interférence (212) pour annuler le signal d'entrée d'interférence.

3. Procédé selon la revendication 1, comprenant en outre :
mise à jour (412) des LLR a posteriori et mise à jour (414) des LLR a priori pour décoder conjointement le bit décodé.

4. Système de communication sans fil, comprenant :

un premier détecteur de symboles (302) pour recevoir un signal d'entrée souhaité ;

un deuxième détecteur de symboles (304) pour recevoir un signal d'entrée d'interférence ;

un premier module de rapport log-vraisemblance sensible aux interférences (206), dans le premier détecteur de symboles, pour générer un rapport log-vraisemblance souhaité à partir du signal d'entrée souhaité en activant un détecteur du maximum de vraisemblance conjoint pour générer le rapport log-vraisemblance souhaité sur une première itération et en activant un module d'annulation d'interférence successif (210) sur toute itération successive pour affiner le rapport log-vraisemblance souhaité ; et

un deuxième module de rapport log-vraisemblance sensible aux interférences (306), dans le deuxième détecteur de symboles, pour générer un rapport log-vraisemblance d'interférence à partir du signal d'entrée d'interférence et décoder conjointement un bit décodé en :

affinant itérativement le rapport log-vraisemblance d'interférence (134) pour annuler le signal d'entrée d'interférence (108), en accouplant un rapport log-vraisemblance a priori de bit d'interférence (132) au premier détecteur de symboles (102) et au deuxième détecteur de symboles (106) et en générant le rapport log-vraisemblance a priori de bit d'interférence (132) à partir du rapport log-vraisemblance d'interférence (134),

où le système de communication sans fil est **caractérisé par** la commutation entre le signal d'entrée souhaité (104) et le signal d'entrée d'interférence (106) lorsqu'un équipement d'utilisateur se déplace vers une source de communication du signal d'entrée d'interférence (106).

5. Système selon la revendication 4, où le premier module de rapport log-vraisemblance sensible aux interférences inclut une mémoire tampon de signal de bit souhaité pour affiner le rapport log-vraisemblance souhaité.

6. Système selon la revendication 4, comprenant en outre :
un module de blanchiment d'interférence dans le premier détecteur de symboles pour annuler le signal d'entrée d'interférence.

7. Système selon la revendication 4, comprenant en outre une mémoire tampon de bit souhaité (126) pour mettre à jour un LLR a posteriori.

8. Système selon la revendication 4, où le deuxième module de rapport log-vraisemblance sensible aux interférences inclut un décodeur de canal d'interférence.

9. Système selon la revendication 4, où le premier détecteur de symboles est un détecteur d'erreur quadratique moyenne minimale accouplé à un détecteur entrée unique-sortie unique.

10. Système selon la revendication 4, comprenant en outre :
une mémoire tampon de signal souhaité accouplée à un décodeur de canal souhaité pour mettre à jour des LLR a priori.

[Fig. 1]

[Fig. 2]

EP 2 878 108 B1

[Fig. 3]

[Fig. 4]

[Fig. 5]

eNodeB₁

eNodeB₂

FEEDBACK

108

504

104

DESIRED

UE₁

INTERFERENCE

506

501

502

d

508

EP 2 878 108 B1

21

[Fig. 6]

600

RECEIVE INPUT SIGNALS
602

GENERATE DESIRED LLR
604

GENERATE INTERFERENCE LLR
606

DECODE BIT
608

**EP 2 878 108 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008168326 A1